**Europäisches Patentamt**

**European Patent Office**

**Office européen des brevets**

(19)

(11) **EP 0 818 076 B1**

(12) **EUROPEAN PATENT SPECIFICATION**

(45) Date of publication and mention
of the grant of the patent:
**10.10.2001 Bulletin 2001/41**

(51) Int Cl.$^7$: **H02H 1/00**

(86) International application number:
**PCT/US96/02546**

(21) Application number: **96909520.7**

(22) Date of filing: **07.03.1996**

(87) International publication number:
**WO 96/30989 (03.10.1996 Gazette 1996/44)**

(54) **electric arc detection circuit and method**

Schaltung und Verfahren zur Erfassung von elektrischen Lichtbögen

circuit et procédé de détection d'arcs électriques

(84) Designated Contracting States:
**DE ES FR GB IT**

(30) Priority: **30.03.1995 US 413304**
**31.05.1995 US 455771**

(43) Date of publication of application:
**14.01.1998 Bulletin 1998/03**

(73) Proprietor: **Siemens Energy & Automation, Inc.**
**Alpharetta, Georgia 30202 (US)**

(72) Inventors:
• **DOLLAR, Charles, Randall, II**
**Norcross, GA 30093 (US)**
• **STRICKLAND, Woothi**
**Decatur, GA 30035 (US)**

(74) Representative: **Allen, Derek et al**
**Siemens Group Services Limited,**
**Intellectual Property Department,**
**Siemens House,**
**Oldbury**
**Bracknell, Berkshire RG12 8FZ (GB)**

(56) References cited:
**EP-A- 0 166 815**     **WO-A-92/08143**
**WO-A-94/22031**     **US-A- 5 223 795**

## Description

FIELD OF THE INVENTION

The present invention relates to monitoring, detecting, analyzing and responding to electric currents on a conductor at frequencies (secondary frequencies) different from the frequency (primary frequency) of the current for which the conductor is intended to conduct (i.e. 60 Hz current conducted within the electrical wiring of a building). In particular, the present invention relates to circuit arrangements for detecting the current and/or voltage at secondary frequencies representative of electric arcs.

BACKGROUND OF THE INVENTION

Various arc detection systems have been used in an attempt to detect arcing in the wiring of both residential and commercial buildings. It is recognized that arcs occurring between line and neutral or ground conductors and series arcing can produce temperatures well above the ignition level of many common flammable materials, and therefore pose a significant fire hazard. For example, wiring with degraded or aged insulation and worn power cords in a home may arc sufficiently to start a fire.

Two basic types of arcing which are likely to occur in buildings are line fault arcing and contact arcing. An arc due to a line fault results from either a line-to-line short, a line-to-neutral or a line-to-ground short. When a fault of this type occurs, the fault will draw current up to or beyond the capacity of the circuit, lights will dim indicating an excessive load is being drawn, and, if the associated circuit is protected by a circuit breaker, the circuit breaker will trip, interrupting the supply of power to the arc. Typically, these events will occur in less than a second, and the arcing will have a duration insufficient to radiate or conduct substantial heat energy to the surrounding materials. Thus, the likelihood of fire is relatively low.

Contact arcing is commonly caused by use of worn electrical outlets, plugs and switches. As a result of such wear, these devices have insufficient current-carrying capacity for their originally intended purposes. For example, a plug may be subjected to a substantial number of heating cycles caused by resistance heating. This cycling gradually decomposes the insulating material around the contact area until material partially flows into the contact area thereby preventing proper electrical contact from being made at the plug. This process may become regenerative as the initial arcing produces more heat, thus, carbonising the insulation, producing an insulating layer of the contact surfaces of the plug.

Other common sites of arcing are oxidised terminals, oxidised and worn switch contacts, and the interfaces between aluminium wiring and connection terminals made of dissimilar metals such as copper. The arcing which normally occurs under these circumstances is usually referred to as series arcing.

In view of the potential for arcing in the electrical systems of buildings, and the potential for devastating results thereof (i.e. building fires), a number of systems have been developed to detecting arcing in building wiring. For example, U.S. Patent No. 5,223,795, issued to Frederick K. Blades on June 29, 1993, and International application No. 94/22031 disclose a method and apparatus for detecting arcing in electrical connections by monitoring high frequency noise. The apparatus monitors high frequency noise on the associated power line characteristic of arcing. One way the apparatus determines if arcing is present is to discriminate arcing noise from other high-frequency noise by determining if gaps in the noise occur every half-cycle of the power frequency.

Systems such as that disclosed in the '795 patent may operate effectively to detect arcing, but it would be desirable to improve the arc detecting capability of such systems so that the system can discriminate between different types of arcing and provide the ability to produce different responses to different types of arcing. Improvements in the performance can take a number of forms such as refining programming and refining interface circuitry to apply more accurate representations of signals monitored by the system. However, regardless of the quality of the system for monitoring and analyzing signals, the system will only produce arc protecting results as good as the systems ability to produce signals representative of the high frequency currents on the wiring being monitored. For example, current transformers are typically used to produce signals representative of the high frequency currents (desired signals) on the wiring being monitored. However, current transformers may incorporate signals representative of noise radiated onto the wires being monitored. In addition, a current transformer may also sense standing waveforms unrelated to the high frequency currents.

Accordingly, there is a need for an improved arc detector and arc detection method which reduce or eliminate the sensing of standing waveforms.

SUMMARY OF THE INVENTION

The invention is defined in independent claims 1 and 13.

EP 0 818 076 B1

BRIEF DESCRIPTION OF THE DRAWINGS

Figure 1 is a schematic circuit diagram of a first embodiment of an arc detection system;
Figure 2 is a schematic circuit diagram of a second embodiment of the arc detection system;
Figures 3A and 3B are a circuit diagram for an embodiment of the arc detection circuit;
Figure 4 is a three-dimensional graph representative of electric arcing, a multi-frequency signal (i.e. white noise) and time-continuous, narrow-band signals;
Figure 5 is a graph of the noise of a drill motor filtered by the embodiment of the arc detection circuit; and
Figure 7 is a graph of the noise produced by a drill motor in the presence of arcing filtered by the embodiment of the arc detection circuit.

DETAILED DESCRIPTION OF THE PREFERRED EMBODIMENT

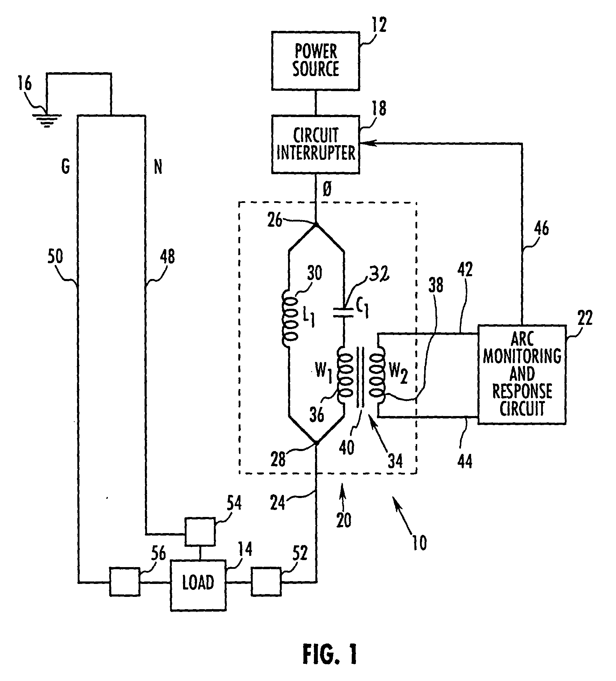

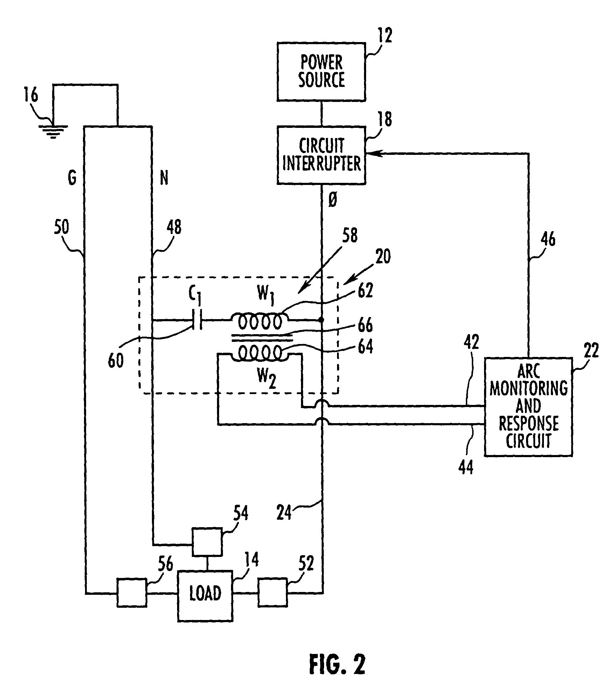

Referring to Figure 1, an arc detection system 10 is configured to detect arcing such as line-to-line, line-to-ground, line-to-neutral or contact arcing. Arc detection is based upon monitoring the current in at least one of the conductors of an alternating current electrical circuit such as that schematically illustrated in Figures 1 and 2. These circuits, within which arcs are monitored, include an alternating current (AC) voltage power source 12, a load 14, a ground reference 16, and a circuit interrupter 18 (e.g., circuit breaker operable by a trip solenoid).

Arc detection system 10 includes a current sensor 20 and an arc monitoring and response circuit 22. In the present embodiment of system 10, current sensor 20 is connected in series with circuit interrupter 18 between power source 12 and load 14. Current sensor 20 includes a terminal 26, a terminal 28, an inductor 30, a capacitor 32, and a transformer 34. Transformer 34 includes a primary winding 36 ($W_1$) and a secondary winding 38 ($W_2$) which are magnetically coupled by a core 40. Inductor 30 is connected between terminals 26 and 28, and capacitor 32 is connected in series with primary winding 36 between terminals 26 and 28. Accordingly, capacitor 32 and primary winding 36 are connected in parallel between terminals 26 and 28 with inductor 30.

Arc monitoring and response circuit 22 is connected to secondary winding 38 by conductors 42 and 44. Transformer 34 provides isolation between conductor 24 and circuit 22, and also applies signals representative of the current in primary winding 36. Arc monitoring and response circuit 22 may be arranged in accordance with the embodiment discussed in detail below. Circuit 22 operates to produce a trip signal in response to the signal applied thereto on conductors 42 and 44. In general, circuit 22 is powered from phase conductor 24 and analyses the non-primary frequency signals in phase conductor 24 to determine the presence of arcing. The trip signal is appropriately conditioned (e.g., amplified and isolated) by an appropriate control circuit within circuit 22 and then applied to a conductor 46 connected to circuit interrupter 18. Accordingly, when circuit 22 detects an undesirable arc based upon the signal produced by current sensor 20, a trip signal is applied to circuit interrupter 18, which disconnects power from power source 12 from load 14.

By way of example, the preferred embodiment of circuit 20 includes a transformer 34 having a one-to-one turn ratio and a ferrite core 40 for magnetically coupling windings 36 and 38. Furthermore, the impedances of inductor 30 and winding 36 may be chosen to be generally equal and in the range of .5 milliohms to 2 ohms at the operating frequency of the electrical circuit. More specifically, the arc detection system described above is typically used in building wiring circuits (i.e., residential or industrial) which are supplied alternating electrical current at 60 Hz. Accordingly, inductor 30 and winding 36 would have an impedance from .5 milliohms to 2 ohms at the primary frequency of 60 Hz.

Capacitor 32 operates to filter current at the primary frequency so this current is inhibited from flowing through winding 36. Accordingly, capacitor 32 is selected to have an impedance at 60 Hz which is in the range of 5,000 to 30,000 times as large as the impedance of inductor 30. For example, inductor 30 may have a value of 1.3 microhenries and capacitor 32 may have a value of 220 picofarads. (At $60H_z$ capacitor 32 has an impedance about 25,000 times that of inductor 30.) Inductor 30 is capable of carrying the full load current on conductor 24. The impedance of inductor 30 is low at the primary frequency of 60 Hz, but increases as the frequency of the current on conductor 24 increases. Thus, the high frequency components pass through the parallel path including capacitor 32 and winding 36. Capacitor 32 and winding 36 produce a band pass filter with a centre frequency which may be in the range of 10 kHz to 1 gigahertz, but is preferably in the range of 5-30 MHz. In general, the centre frequency ($f_c$) is defined by the following equation:

$$f_c = [2* \pi * (\text{Capacitance of capacitor 32 * Inductance of winding 36})^{1/2}]^{-1}$$

In the present embodiment of arc detection system 10, circuit interrupter 18 is preferably a circuit breaker having a tripping coil which operates the circuit breaker in response to a trip signal applied to conductor 46. Additionally,

3

current sensor 20 is preferably located in the phase conductor. However, there may be applications wherein sensor 20 is connected in series with the neutral conductor 48 or the ground conductor 50. Additionally, the circuit shown in Figure 1 is a single-phase circuit. However, for a multi-phase circuit, a current sensor 20 could be coupled in all of the phase conductors thereof.

As generally discussed above, arc detection system 10 is configured to detect line-to-line, line-to-ground, line-to-neutral, and contact arcing. By way of specific example, load 14 is connected to phase conductor 24, neutral conductor 48 and ground conductor 50 by terminals 52, 54 and 56, respectively. Thus, in the circuit of Figure 1, the potential for arcing is between conductors 24 and 48, 24 and 50, within terminal 52, within terminal 54, within terminal 56, and within load 14. Current sensor 20 is configured to produce signals representative of current frequencies related to these types of arcing without introducing spurious signals. Thus, this reduces the risk that arc monitoring and response circuit 22 will apply spurious signals to conductor 46, thereby producing unwanted circuit interruption by circuit interrupter 18.

Figure 2 illustrates a second embodiment of current sensor 20. In this embodiment, current sensor 20 is connected between conductor 24 and neutral conductor 48 or ground conductor 50. The second embodiment of current sensor 20 includes a transformer 58 and a capacitor 60. Transformer 58 includes a primary winding 62, a secondary winding 64, and a toroid core 66. Windings 62 and 64 are bifilar windings (i.e., wound as a pair of winding wires around core 66). Capacitor 60 and primary winding 62 are connected in series between phase conductor 24 and neutral conductor 48, as shown in Figure 2.

Capacitor 60 and the inductance of winding 62 form a band-pass filter. Signals which may include components representative of arcing are coupled to secondary winding 64 to produce a voltage signal. By providing capacitor 60 a value of about 100 picofarads and winding 62 an inductance of about 1 microhenry, the transformer provides a centre frequency between 16 and 17 MHz. In general, the embodiment of current sensor 20 illustrated in Figure 2 permits system 10 to monitor arcing in an electric circuit based upon the voltage in the electric circuit, whereas the embodiment of current sensor 20 illustrated in Figure 1 permits system 10 to monitor the electric circuit for arcing based upon current. Depending upon the specific application, either one or both of these sensors may be used to provide an optimal system for monitoring arcing.

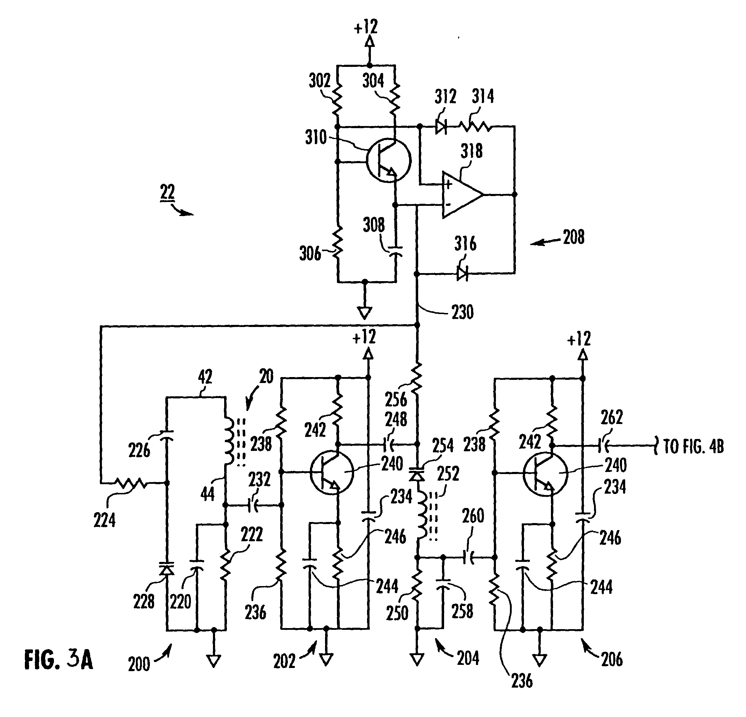

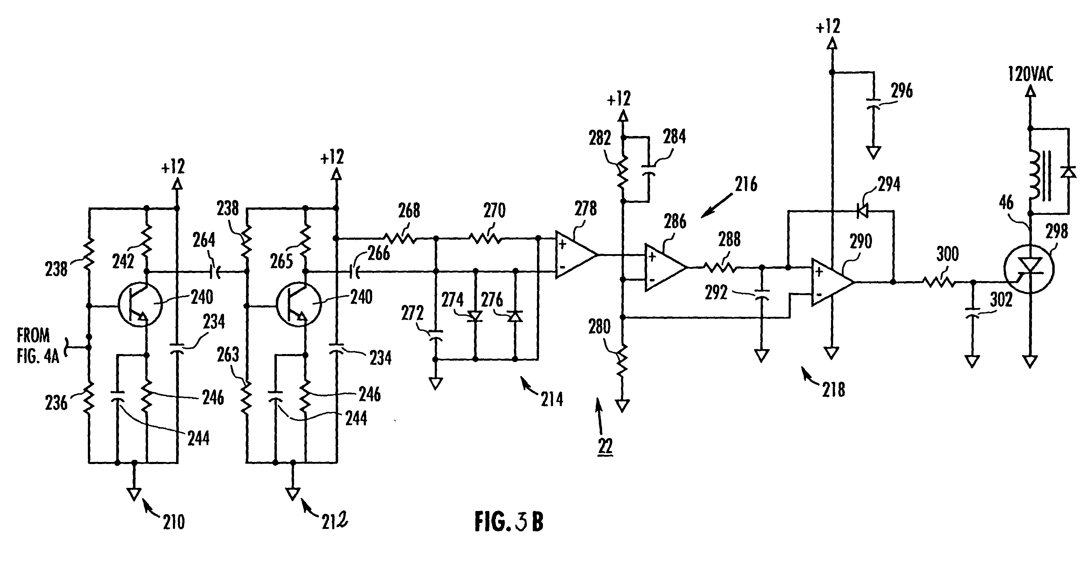

Referring to Figures 3A and 3B, the embodiment of arc monitoring and response circuit 22 includes a variable frequency (swept) filter circuit 200, an amplifier circuit 202, a second variable frequency (swept) filter circuit 204, an amplifier circuit 206, a filter sweep signal generator circuit 208, an amplifier circuit 210, an amplifier circuit 212, a clipping and comparator circuit 214, a reference selector circuit 216, and an integration circuit 218. Variable frequency filter 200 includes a capacitor 220 and resistor 222 connected between ground and conductor 44, a resistor 224, a capacitor 226 connected between conductor 42 and resistor 224, and a varactor 228 (i.e. variable capacitance diode) connected between resistor 224 and ground. Resistor 224 is also connected to output conductor 230 of filter sweep signal generator 208.

Variable frequency filter 200 is connected to amplifier 202 by a capacitor 232 which filters the DC components on signals produced by filter 200 before application of such signals to amplifier 202. Amplifier 202 is powered by the 12V system supply and includes a capacitor 234 connected between the 12V supply and ground, a resistor 236 connected between capacitor 232 and ground, a resistor 238 connected between capacitor 232 and the 12V supply, and a transistor 240. The base of transistor 240 is connected to capacitor 232, the collector of transistor 240 is connected to the 12V supply by a resistor 242, and the emitter of transistor 240 is connected to ground by the parallel connection of a capacitor 244 and a resistor 246.

A capacitor 248 connects the collector of transistor 240 to the second variable frequency filter 204. More specifically, filter 204 includes a resistor 250 connected between ground and an inductor 252, a varactor 254 having its anode connected to the inductor, and its cathode connected to capacitor 248, and a resistor 256 connected between the cathode of varactor 254 and conductor 230. Filter 204 also includes a capacitor 258 connected in parallel with resistor 250.

A capacitor 260 connects filter 204 to amplifier 206. As with capacitors 232 and 248, capacitor 260 filters out the DC components of the signal applied by filter 204 to amplifier 206. Referring specifically to Figures 3A and 3B, amplifiers 202, 206, 210 and 212 have substantially the same structure and components. Accordingly, the components of amplifiers 206, 210, and 212 are referenced with the same numbers as the components of amplifier 202. Amplifier 206 is connected to amplifier 210 with a capacitor 262, and amplifier 210 is connected to amplifier 212 with a capacitor 264. Capacitors 262 and 264 filter DC components which may be in the signals transmitted from amplifiers 206 to 210 and from amplifier 210 to 212, respectively. For purposes of appropriately tuning amplifier 212, amplifier 212 differs from amplifier 202 in that resistor 236 has been replaced with a resistor 263 having a different resistive value, and resistor 242 has been replaced with resistor 265 having a different resistive value than resistor 242.

A capacitor 266 and a resistor 268 connect amplifier 212 to clipping and comparator circuit 214. Circuit 214 includes a resistor 270, capacitor 272, diode 274, diode 276, and operational amplifier 278 connected together as shown in Figure 3B.

The output of amplifier 278 is connected to the input of reference selector circuit 216. In particular, circuit 216 is coupled between ground and the 12V reference by a resistor 280, a resistor 282, and a capacitor 284 connected in parallel with resistor 282. Circuit 216 also includes an comparator 286 having its non-inverting input connected to the output of amplifier 278, and its inverting input connected to ground by resistor 280.

The output of amplifier 286 is connected by a resistor 288 to integration circuit 218. Integration circuit 218 includes a comparator 290 having its non-inverting input connected to ground by capacitor 292, and connected to the output of amplifier 286 by resistor 288. The inverting input of comparator 290 is connected to ground by resistor 280. A diode 294 connects the output of comparator 290 to the non-inverting input thereof. Power is applied to comparator 290 by the 12V voltage supply which is filtered in part by capacitor 296. The output of comparator 290 is also connected to an SCR 298 by a resistor 300. A capacitor 302 connects SCR 298 to ground as shown. The anode of SCR 298 is connected to the tripping solenoid of circuit interrupter 18 by conductor 46. The cathode of SCR 298 is connected to ground.

Referring again to Figure 3A, filter sweep signal generator 208 includes a resistor 302, a resistor 304, a resistor 306, a capacitor 308, a transistor 310, a diode 312, a resistor 314, a diode 316, and an operational amplifier 318 connected to conductor 230, ground and the 12V supply as shown in Figure 3A. This configuration of generator circuit 208 produces a voltage on conductor 230 which is basically a saw-tooth wave which cycles from .5 to 10 volts at a rate of approximately 180 Hz. This 180 Hz signal is applied to filter circuits 200 and 204 to control varactors 228 and 254 which vary the centre frequencies of these filters from between 2 and 8 MHz to 12 to 18 MHz. Preferably, filter circuits 200 and 204 are configured to have centre frequencies which cycle between 5 and 15 MHz at a rate of 180 Hz which corresponds to the sweep signal or modified saw-tooth (i.e. charge capacitor 308 at a given rate over about 1/180 sec and then immediately discharge capacitor 308) wave produced on conductor 230 by generator 208.

In general, filters 200 and 204 operate to filter or transform the signal produced by sensor 20 into a signal which has amplitudes which represent the potential or the current in conductor 24. Filter 204 is not absolutely essential, however, the signal produced by sensor 20 is filtered at frequencies ranging from about 5 to 15 MHz which increment (i.e. increase or decrease) at a constant rate over the cycle time (i.e., 1/180 seconds) of the sweep signal at conductor 230. However, due to propagation delays of the signal produced by sensor 20 through filter 200 and amplifier 202, filter 204 filters the signal at a time which is delayed from the time at which filter 200 filters the signal. Accordingly, filters 200 and 204 in effect operate as a compound filter to narrow the band width about which the signal produced by sensor 20 is filtered. By way of specific example, the band width of filters 200 and 204 individually is approximately 2 MHz, and this band width can be narrowed to approximately 1 MHz by combining filters 200 and 204 as shown in Figure 3A.

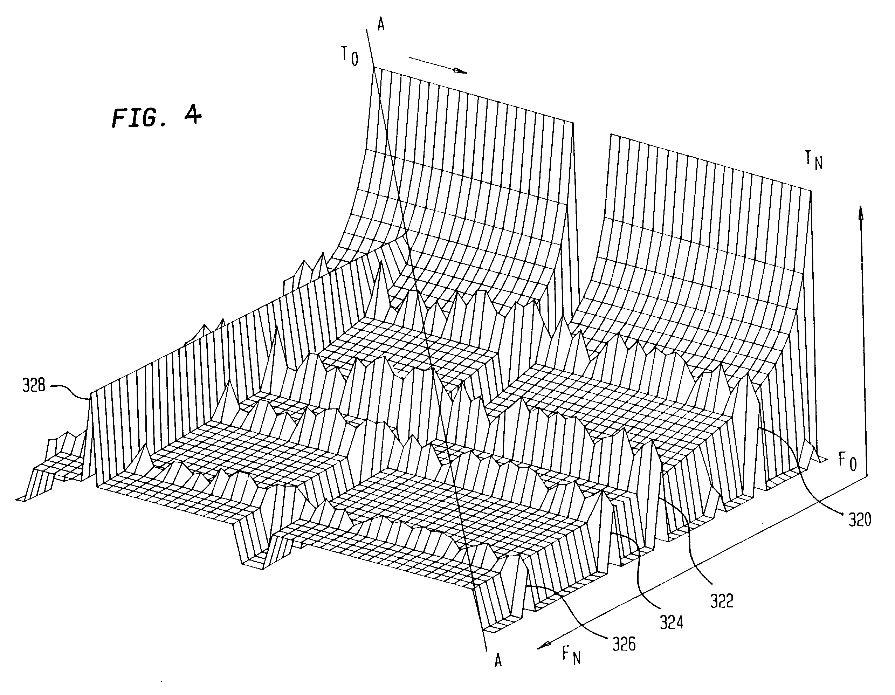

Referring to Figure 4, a three-dimensional graph of the signal produced by an arc on conductor 24 is shown. In particular, the graph includes frequency, amplitude, and time on the axes. The graph includes various features such as ridges 320, 322, 324 and 326 which represent narrow-band signals such as radio stations transients produced by older style ballasts used for fluorescent lighting. The graph also includes a relatively continuous formation 328 extending along an axis generally parallel with the frequency axis and of relatively short duration in time. This formation 328 is representative of white noise which theoretically has equal amplitude in all of the frequencies over which it is present. The remainder of the amplitudes shown in Figure 4 are a result of arcing energy. The arc which is represented by the graph in Figure 4 extends over the full range of frequency shown, and has a duration for the full time period $T_0$ to $T_N$. The arc detector shown in Figures 4A and 3B is configured to produce a trip signal in the presence of a signal which has amplitudes in a large range of frequencies, and a duration exceeding a predetermined limit (i.e., arcing).

Referring again to Figures 3A and 3B, when a signal including arcing such as that represented graphically in Figure 4, is applied to filter 200, filter 200 outputs a signal having the amplitudes which fall along line A-A, and correspond to the frequencies from FO to FN. The effect of using the variable frequency filter 200 is to produce a signal at the output thereof which includes relatively minimal amplitude information relating to the narrow-band signals 320, 322, 324 and 326, and the white noise 328. Accordingly, the production of spurious trip signals at SCR 298 is substantially reduced by using a variable frequency filter such as filter 200.

Amplifier 202 has a gain between 100 to 400 throughout the frequency spectrum of the signal produced at the output of capacitor 232, and amplifies the signal for application to the second variable frequency filter 204. As briefly discussed above, filter 204 operates substantially the same as filter 200, and filters the signal at a slight centre frequency shift from filter 200. The combination of filters 200 and 204 filters the signal to provide a narrower band width for the centre frequencies at which the signal is filtered. As discussed above, the band width for the centre frequencies at which the signal is filtered is reduced by almost 50% by the use of the second variable frequency filter 204. However, depending upon the application and cost considerations, filter 204 could be eliminated.

Amplifiers 206, 210 and 212 each have a gain of approximately 100 to 400 across the frequency range of the signal produced at the output of capacitor 260. Amplification by amplifiers 206, 210 and 212 produce a signal at the output of capacitor 266 which can be clipped at .6V by clipping circuit 214.

When the signal produced at the output of capacitor 266 is the result of a signal applied to sensor 20 which includes arcing, the output of operational amplifier 278 remains high relative to the inverting input reference voltage (e.g. approximately 8V) of operational amplifier 286. As a result, the output of amplifier 286 is driven high and charges capacitor 292. When the output of amplifier 286 is low, capacitor 292 is discharged through amplifier 286. Accordingly, capacitor 292, in cooperation with the associated circuitry, operates as an integrator to integrate the signal produced by amplifier 278 which is above the threshold voltage set by the voltage reference at the inverting input of amplifier 286. Accordingly, when arcing is present, and the output of amplifier 286 remains high, capacitor 292 charges and when the voltage across capacitor 292 exceeds a predetermined limit as set by the resistor bridge 282 and 280 and the 12V supply (e.g., approximately 8V), comparator 290 outputs a logic high tripping signal to resistor 300 which forward biases SCR 298 which in turn activates the trip solenoid of the circuit interrupter to open conductor 24 and remove load 14 from power source 12.

Diode 294 is a latching diode which latches the output of comparator 290 high when a trip signal is produced on the output thereof. The purpose of this latching arrangement is to ensure that SCR 298 remains forward biased even though SCR 298 may be controlling the application of an alternating current to the tripping solenoid of the circuit interrupter. More specifically, without this arrangement, the alternating current would reverse bias SCR 298 and SCR 298 would discontinue current conduction in the event arcing terminated. Typically, once arcing is detected by the circuit, tripping should occur even when arcing may have terminated. This is important because circuit interrupter 18 should be opened upon detection of arcing regardless of whether or not arcing terminates before the solenoid is energized to open circuit interrupter 18. Upon the opening of circuit interrupter 18, the 12V power supply is discontinued, and the capacitors in the circuitry of the arc detector discharge, and the latching of comparator 290 is discontinued.

By way of example, the components of the third embodiment of circuit 22 may have the following characteristics:

| Capacitor 220 | 250 pF |
|---|---|
| Resistor 222 | 49.9 ohms |
| Resistor 224 | 100K ohms |
| Capacitor 226 | 250 pF |
| Capacitor 232 | 1nF |
| Capacitor 234 | 100 μF |
| Resistor 236 | 10K ohms |
| Resistor 238 | 100K ohms |
| Transistor 240 | 2N3904 |
| Resistor 242 | 10K ohms |
| Capacitor 244 | 1nF |
| Resistor 246 | 470 ohms |
| Capacitor 248 | 1nF |
| Resistor 250 | 49.9 ohms |
| Inductor 252 | 1.5 μH |
| Resistor 256 | 100K ohms |
| Capacitor 258 | In F |
| Capacitor 260 | In F |
| Capacitor 262 | In F |
| Resistor 263 | 51.1 K ohms |
| Capacitor 264 | in F |
| Resistor 265 | 3.3K ohms |
| Capacitor 266 | in F |
| Resistor 268 | 1M ohms |
| Resistor 270 | 10K ohms |
| Capacitor 272 | 15 pF |
| Diode 274 | 1N4148 |
| Diode 276 | 1N4148 |
| Amplifier 276 | LM2902 |
| Resistor 280 | 22.6K ohms |
| Resistor 282 | 7.5K ohms |
| Capacitor 284 | 100n F |

(continued)

| Comparator 286 | LM2902 |
|---|---|
| Resistor 288 | 107K ohms |
| Comparator 290 | LM2902 |
| Capacitor 292 | 100nF |
| Diode 294 | 1N4148 |
| Capacitor 296 | 100nF |
| SCR 298 | EC103D |
| Resistor 300 | 1K ohms |
| Capacitor 302 | 100nF |

The embodiment of the arc detector has been described in detail in reference to the analog circuitry of Figures 3A and 3B. Presently, it is believed that this is the most cost effective way to implement the arc detector. However, this arc detector can be implemented in a programmed digital processor with associated analog-to-digital circuitry and digital inputs and outputs (e.g., microcontroller). More specifically, sensor 20 would be coupled to the analog-to-digital converter of the controller with appropriate filtering, and the controller would be programmed (configured) to provide digital filtering of the digital signal produced by the analog-to-digital converter. This digitally filtered signal would then be analyzed by appropriate software to produce digital data representative of a trip signal when the signal produced by sensor 20 represents an arc in conductor 24. In other words, the digital filtering and data manipulation which would occur in the microcontroller would be configured to produce a trip signal in response to an arcing signal in substantially the same manner as that produced by the analog circuitry of Figures 3A and 3B. SCR 298 would be coupled to a digital output of the microcontroller by appropriate isolation circuitry as necessary and, upon generation of a trip signal by the microcontroller in response to arcing, the digital output would forward bias SCR 298 to trip the circuit breaker. Accordingly, given the circuitry shown in Figures 3A and 3B, substitution of this circuitry with an appropriately configured microcontroller is possible and would be likely in the event that the costs of microcontrollers capable of handling the signal processing required to implement the arc detector are reduced in the future.

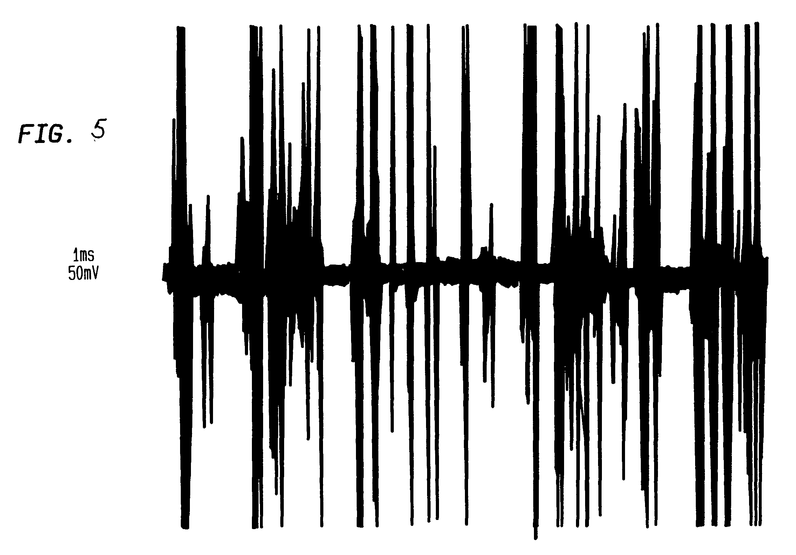

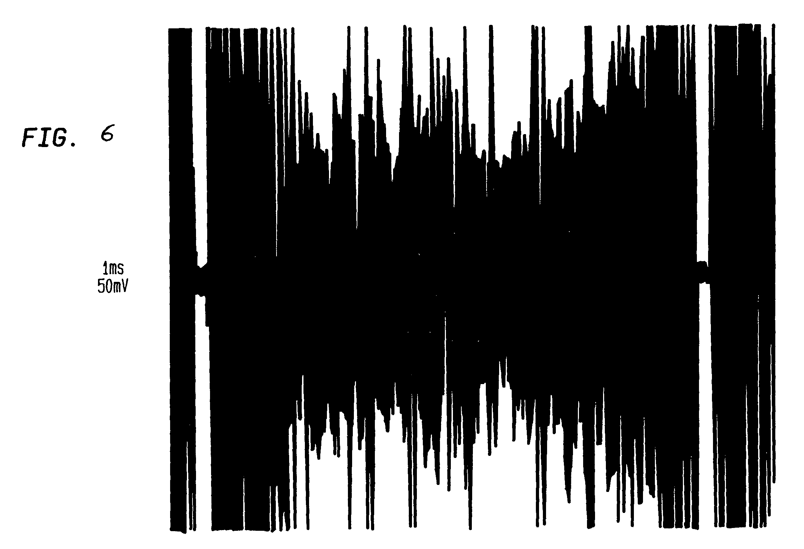

Turning now to a specific situation wherein it is desirable to avoid spurious tripping as a result of failing to accurately determine the presence of arcing, Figures 5 and 6 illustrate signals representative of those produced at capacitor 266. Figure 5 illustrates the signal produced when an electric drill is connected as load 14. It is generally known that electric drills produce substantial noise in the circuitry to which they are attached. However, an arc detector should not produce a trip signal in response to the noise produced thereby. Figure 6 illustrates a signal produced at capacitor 266 which includes both the presence of a drill and arcing. As can be readily appreciated, the filtered signal shown in Figure 6 has amplitudes which are relatively high at the range of frequencies for which filters 200 and 204 sweep. Accordingly, when the signal shown in Figure 5 is applied to comparator 286, the output goes high and low in such a manner that capacitor 292 does not have a chance to charge (i.e. integrate) and thus produce a tripping signal at the output of comparator 290. However, the signal shown in Figure 6 will maintain the output high substantially constantly, and cause capacitor 292 to charge (i.e. integrate) to a voltage which causes comparator 290 to produce a trip signal at the output thereof.

The preferred embodiment of the present invention has been disclosed by way of example and it will be understood that other modifications may occur to those skilled in the art without departing from the scope of the appended claims. For example, the values of the capacitances and inductances may be varied to accommodate primary frequencies other than 60 Hz (e.g., 50 Hz for European applications). Additionally, the core configuration of transformers 40 and 66 may also be modified to accommodate different applications. By way of further modification, the circuit of Figure 2 may be modified by using 5.5 microhenry primary winding 62. By way of further modification, current sensor 20, when used with the monitoring and response circuit 22, may take the form of a current transformer magnetically coupled to one or more of conductors 24, 48 or 50.

**Claims**

1. An arc detector (10) coupled to an electric conductor (24) and generating an arc detection signal in response to a potential or a current within the conductor generated in response to an electric arc, the detector comprising:

   a transducer (20) coupled to the electric conductor to generate a first signal representative of the potential or current within the conductor, **characterised by** the arc detector further comprising:

   a variable frequency filter circuit (200, 204) having a filter frequency which sweeps within a predetermined range, the filter receiving said first signal and generating a second signal having a plurality of amplitudes representative of the potential or current at a respective plurality of frequencies; and

a threshold sensing circuit (206, 214, 216, 218) coupled to the variable frequency filter circuit to generate the arc detection signal when a plurality of said amplitudes exceed a predetermined threshold.

2. The arc detector of claim 1, wherein the variable frequency filter circuit comprises first and second variable frequency filters (200, 204) which have a centre frequency which sweeps from a first predetermined frequency to a second predetermined frequency, the plurality of frequencies being between the first and second predetermined frequencies, the first variable frequency filter being coupled to the transducer and the second variable frequency filter being coupled to the first variable frequency filter to produce the second signal.

3. The arc detector of claim 2, wherein the centre frequency cycles between the first and second predetermined frequencies at a constant rate over a first predetermined time period.

4. The arc detector of claim 3, wherein the first predetermined frequency is in the range of 2 to 8 megahertz and the second predetermined frequency is in the range of 12 to 18 megahertz.

5. The arc detector of any of claims 2 to 4, further comprising a first amplifying circuit (202) coupled between the variable frequency filters.

6. The arc detector of claim 5, wherein the threshold sensing circuit comprises:

a second amplifying circuit (206) coupled to the second variable frequency filter to amplify the second signal to produce a third signal;

an integration circuit (214, 218) coupled to the second amplifying circuit to integrate the third signal when the amplitude of the third signal exceeds said predetermined threshold to produce an integration signal; and

a comparator circuit (216, 218) coupled to the integration circuit to output the arc detection signal when the integration signal exceeds a predetermined limit.

7. The arc detector of any of claims 2 to 6, wherein the centre frequency of the second variable frequency filter is offset from the centre frequency of the first variable frequency filter.

8. The arc detector of any of claims 1 to 7, wherein the transducer is a current transformer.

9. The arc detector of any of claims 1 to 7, wherein the transducer is a current shunt.

10. The arc detector of any preceding claim, further comprising a circuit interrupter (18) for interrupting the flow of current within the electrical conductor in response to the arc signal.

11. The arc detector of claim 10, wherein the interrupter comprises:

a switching device coupled to the electrical conductor and operable to open the circuit defined by the electrical conductor in response to a trip signal; and

a trip circuit coupled to the switching device and the threshold sensing circuit to apply a trip signal to the switching device when arc detection signal is generated.

12. The arc detector of claim 11, wherein the switching device is a circuit breaker including a tripping coil coupled to the trip circuit.

13. An electric arc detection method comprising

generating a first signal representative of the potential or the current in an electrical conductor; **characterized by** the steps of:

filtering the first signal while sweeping the filter frequency within a predetermined range to generate a second signal having a plurality of amplitudes representative of the potential or current at a respective plurality of frequencies; and

generating an arc detection signal when a plurality of said amplitudes exceed a predetermined threshold.

14. The method of claim 13, wherein the step of filtering includes filtering the first signal twice.

15. The method of claim 13 or 14, wherein the step of filtering includes cycling the filter frequency between first and second predetermined frequencies at a constant rate over a first predetermined time period.

16. The method of any of claims 13 to 15, wherein the step of generating further comprises the steps of:

   amplifying the second signal to produce a third signal; and
   integrating the third signal when the amplitude of the third signal exceeds said predetermined threshold to produce an integration signal.

17. The method of claim 16, wherein the step of generating further comprises the step of outputting the arc detection signal when the integration signal exceeds a predetermined limit.


**Patentansprüche**

1. Lichtbogendetektor (10), der an einen elektrischen Leiter (24) angeschlossen ist und ein Lichtbogendetektionssignal in Abhängigkeit von einer Spannung oder einem Strom im Leiter, die oder der in Abhängigkeit von einem elektrischen Lichtbogen generiert wurde, erzeugt, mit

   einem Signalumformer (20), der an den elektrischen Leiter angeschlossen ist und ein erstes Signal erzeugt, das die Spannung oder den Strom im Leiter kennzeichnet, **dadurch gekennzeichnet, daß** der Lichtbogendetektor des weiteren umfaßt:

   eine Filterschaltung (200, 204) mit variabler Frequenz, die eine Filterfrequenz besitzt, die einen vorgegebenen Bereich überstreicht, wobei das Filter das erste Signal empfängt und ein zweites Signal mit einer Vielzahl von Amplituden, die die Spannung oder den Strom bei einer entsprechenden Vielzahl von Frequenzen kennzeichnen, erzeugt; und

   eine Schwellenabtastschaltung (206, 214, 216, 218), die an die Filterschaltung mit variabler Frequenz angeschlossen ist, um das Lichtbogendetektionssignal zu erzeugen, wenn eine Vielzahl der Amplituden eine vorgegebene Schwelle übersteigt.

2. Lichtbogendetektor nach Anspruch 1, bei dem die Filterschaltung mit variabler Frequenz ein erstes und zweites Filter (200, 204) mit variabler Frequenz umfaßt, die eine Mittelfrequenz besitzen, die sich von einer ersten vorgegebenen Frequenz bis zu einer zweiten vorgegebenen Frequenz bewegt, wobei die Vielzahl der Frequenzen zwischen der ersten und zweiten vorgegebenen Frequenz liegt, und bei dem das erste Filter mit variabler Frequenz an den Signalumformer und das zweite Filter mit variabler Frequenz an das erste Filter mit variabler Frequenz angeschlossen sind, um das zweite Signal zu erzeugen.

3. Lichtbogendetektor nach Anspruch 2, bei dem sich die Mittelfrequenz zwischen der ersten und zweiten vorgegebenen Frequenz mit einer konstanten Rate über eine erste vorgegebene Zeitdauer zyklisch bewegt.

4. Lichtbogendetektor nach Anspruch 3, bei dem die erste vorgegebene Prequenz in einem Bereich von 2 bis 8 MHz und die zweite vorgegebene Frequenz in einem Bereich von 12 bis 18 MHz liegen.

5. Lichtbogendetektor nach einem der Ansprüche 2 bis 4, der des weiteren eine erste Verstärkerschaltung (202) aufweist, die zwischen die Filter mit variabler Frequenz geschaltet ist.

6. Lichtbogendetektor nach Anspruch 5, bei dem die Schwellenabtastschaltung umfaßt:.

   eine zweite Verstärkerschaltung (206), die an das zweite Filter mit variabler Frequenz angeschlossen ist, um das zweite Signal zu verstärken und ein drittes Signal zu erzeugen;

   eine Integrationsschaltung (214, 218), die an die zweite Veratärkerschaltung geschaltet ist, um das dritte Signal zu integrieren, wenn die Amplitude des dritten Signales die vorgegebene Schwelle übersteigt, und ein Integrationssignal zu erzeugen; und

eine Komparatorschaltung (216, 218), die an die Integrationsschaltung angeschlossen ist, um das Lichtbogendetektionssignal abzugeben, wenn das Integrationssignal eine vorgegebene Grenze übersteigt.

**7.** Lichtbogendetektor nach einem der Ansprüche 2 bis 6, bei dem die Mittelfrequenz des zweiten Filters mit variabler Frequenz gegenüber der Mittelfrequenz des ersten Filters mit variabler Frequenz versetzt ist.

**8.** Lichtbogendetektor nach einem der Ansprüche 1 bis 7, bei dem der Signalumformer ein Transformator ist.

**9.** Lichtbogendetektor nach einem der Ansprüche 1 bis 7, bei dem der Signalumformer ein Strom-Shunt ist.

**10.** Lichtbogendetektor nach einem der vorangehenden Ansprüche, der des weiteren einen Schaltungsunterbrecher (18) zum Unterbrechen des Stromflusses im elektrischen Leiter in Abhängigkeit vom Lichtbogensignal aufweist.

**11.** Lichtbogendetektor nach Anspruch 10, bei dem der Unterbrecher umfaßt:

eine Schaltvorrichtung, die an den elektrischen Leiter geschaltet ist und die vom elektrischen Leiter gebildete Schaltung in Abhängigkeit von einem Auslösesignal öffnen kann; und

eine an die Schaltvorrichtung und die Schwellenabtastschaltung geschaltete Auslöseschaltung zur Abgabe eines Auelösesignales an die Schaltvorrichtung, wenn das Lichtbogendetektionssignal erzeugt wird.

**12.** Lichtbogendetektor nach Anspruch 11, bei dem die Schaltvorrichtung ein Trennschalter ist, der eine an die Auslöseschaltung geschaltete Auslösespule umfaßt.

**13.** Detektionsverfahren für einen elektrischen Lichtbogen, bei dem ein erstes Signal erzeugt wird, das die Spannung oder den Strom in einem elektrischen Leiter kennzeichnet, **gekennzeichnet durch** die folgenden Schritte:

Filtern des ersten Signales, während die Filterfrequenz einen vorgegebenen Bereich überstreicht, um ein zweites Signal mit einer Vielzahl von Amplituden, die die Spannung oder den Strom bei

einer entsprechenden Vielzahl von Frequenzen kennzeichnen, zu erzeugen; und

Erzeugen eines Lichtbogendetektionssignales, wenn eine Vielzahl der Amplituden eine vorgegebene Schwelle übersteigt.

**14.** Verfahren nach Anspruch 13, bei dem der Schritt des Filterns das doppelte Filtern des ersten Signales umfaßt.

**15.** Verfahren nach Anspruch 13 oder 14, bei dem der Schritt des Filterns das zyklische Bewegen der Filterfrequenz zwischen der ersten und zweiten vorgegebenen Frequenz mit einer konstanten Rate über eine erste vorgegebene Zeitdauer umfaßt.

**16.** Verfahren nach einem der Ansprüche 13 bis 15, bei dem der Signalerzeugungsschritt des weiteren folgende Schritte umfaßt:

Verstärken des zweiten Signales zur Erzeugung eines dritten Signales; und

Integrieren des dritten Signales, wenn die Amplitude des dritten Signales die vorgegebene Schwelle übersteigt, um ein Integrationssignal zu erzeugen.

**17.** Verfahren nach Anspruch 16, bei dem der Schritt der Signalerzeugung des weiteren den Schritt der Abgabe des Lichtbogendetektionssignales, wenn das Integrationssignal eine vorgegebene Grenze übersteigt, umfaßt.

**Revendications**

**1.** Détecteur (10) d'arcs couplé à un conducteur (24) électrique et produisant un signal de détection d'arcs en réponse à un potentiel ou à un courant à l'intérieur du conducteur produit en réponse à un arc électrique, le détecteur comportant :

un transducteur (20) couplé au conducteur électrique pour produire un premier signal représentatif du potentiel ou du courant à l'intérieur du conducteur, **caractérisé par** le fait que le détecteur d'arcs comporte en outre :

un circuit (200, 204) de filtre à fréquence variable ayant une fréquence de filtre qui balaye à l'intérieur d'un domaine déterminé à l'avance, le filtre recevant le premier signal et produisant un second signal ayant une pluralité d'amplitudes représentatives du potentiel ou du courant à une pluralité respective defréquences ; et

un circuit (206, 214, 216, 218) de détection de seuil couplé au circuit filtre à fréquence variable pour produire le signal de détection d'arcs lorsqu'une pluralité des amplitudes dépassent un seuil déterminé à l'avance.

2. Détecteur d'arcs suivant la revendication 1, dans lequel le circuit filtre à fréquence variable comporte des premier et second filtres (200, 204) à fréquence variable qui ont une fréquence centrale qui balaye d'une première fréquence déterminée à l'avance à une seconde fréquence déterminée à l'avance, la pluralité de fréquences étant comprise entre les première et seconde fréquences déterminées à l'avance, le premier filtre à fréquence variable étant couplé au transducteur et le second filtre à fréquence variable étant couplé au premier filtre à fréquence variable pour produire le second signal.

3. Détecteur d'arcs suivant la revendication 2, dans lequel la fréquence centrale suit un cycle entre les première et seconde fréquences déterminées à l'avance à une vitesse constante sur une première période déterminée à l'avance.

4. Détecteur d'arcs suivant la revendication 3, dans lequel la première fréquence déterminée à l'avance est comprise entre 2 et 8 Mz et la seconde fréquence déterminée à l'avance est comprise entre 12 et 18 Mz.

5. Détecteur d'arcs suivant l'une quelconque des revendications 2 à 4, comportant en outre un premier circuit (202) d'amplification couplé entre les filtres à fréquence variable.

6. Détecteur d'arcs suivant la revendication 5, dans lequel le circuit de détection de seuil comporte :

un second circuit (206) d'amplification couplé au second filtre à fréquence variable pour amplifier le second signal pour produire un troisième signal ;
un circuit (214, 218) d'intégration couplé au second circuit d'amplification pour intégrer le troisième signal lorsque l'amplitude du troisième signal dépasse le niveau de seuil déterminé à l'avance pour produire un signal d'intégration ; et
un circuit (216, 218) comparateur couplé au circuit d'intégration pour émettre en sortie le signal de détection d'arcs lorsque le signal d'intégration dépasse une limite déterminée à l'avance.

7. Détecteur d'arcs suivant l'une quelconque des revendications 2 à 6, dans lequel la fréquence centrale du second filtre à fréquence variable est décalée par rapport à la fréquence centrale du premier filtre à fréquence variable.

8. Détecteur d'arcs suivant l'une quelconque des revendications 1 à 7, dans lequel le transducteur est un transformateur de courant.

9. Détecteur d'arcs suivant l'une quelconque des revendications 1 à 7, dans lequel le transducteur est une dérivation de courant.

10. Détecteur d'arcs suivant l'une quelconque des revendications précédentes, comportant en outre un interrupteur (18) de circuit destiné à interrompre le passage de courant dans le conducteur électrique en réponse au signal d'arc.

11. Détecteur d'arcs suivant la revendication 10, dans lequel l'interrupteur comporte :

un dispositif de commutation couplé au conducteur électrique et pouvant fonctionner pour ouvrir le circuit défini par le conducteur électrique en réponse à un signal de déclenchement ; et
un circuit de déclenchement couplé au dispositif de commutation et au circuit de détection de seuil pour appliquer un signal de déclenchement au dispositif de commutation lorsque le signal de détection d'arcs est produit.

12. Détecteur d'arcs suivant la revendication 11, dans lequel le dispositif de commutation est un disjoncteur incluant une bobine de déclenchement couplé au circuit de déclenchement.

**13.** Procédé de détection d'arcs électriques comportant l'étape qui consiste à :

produire un premier signal représentatif du potentiel ou du courant dans un conducteur électrique; **caractérisé par** les étapes qui consistent à :

filtrer le premier signal tout en balayant la fréquence de filtre dans un domaine déterminé à l'avance pour produire un second signal ayant une pluralité d'amplitudes représentatives du potentiel ou du courant à une pluralité respective de fréquences ; et
produire un signal de détection d'arcs lorsqu'une pluralité des amplitudes dépassent un niveau de seuil déterminé à l'avance.

**14.** Procédé suivant la revendication 13, dans lequel l'étape de filtrage inclut l'étape qui consiste à filtrer le premier signal deux fois.

**15.** Procédé suivant la revendication 13 ou 14, dans lequel l'étape de filtrage comporte en outre l'étape qui consiste à faire suivre un cycle à la fréquence de filtre entre les première et seconde fréquences déterminées à l'avance à une vitesse constante sur une première période déterminée à l'avance.

**16.** Procédé suivant l'une quelconque des revendications 13 à 15, dans lequel l'étape de production comporte en outre les étapes qui consistent à :

amplifier le second signal pour produire un troisième signal ; et
intégrer le troisième signal lorsque l'amplitude du troisième signal dépasse le niveau de seuil déterminé à l'avance pour produire un signal d'intégration.

**17.** Procédé suivant la revendication 16, dans lequel l'étape de production comporte en outre l'étape qui consiste à émettre en sortie le signal de détection d'arcs lorsque le signal d'intégration dépasse une limite déterminée à l'avance.

EP 0 818 076 B1

FIG. 1

13

**FIG. 2**

FIG. 3A

EP 0 818 076 B1

FIG. 3 B

EP 0 818 076 B1

FIG. 4

FIG. 5

1ms
50mV

FIG. 6

1ms
50mV